(19) **Europäisches Patentamt / European Patent Office / Office européen des brevets**

(11) **EP 2 702 906 B1**

(12) **EUROPEAN PATENT SPECIFICATION**

(45) Date of publication and mention
of the grant of the patent:
**02.03.2016 Bulletin 2016/09**

(51) Int Cl.:
***C08J 9/33*** *(2006.01)*

(21) Application number: **12777349.7**

(22) Date of filing: **12.03.2012**

(86) International application number:
**PCT/JP2012/056245**

(87) International publication number:
**WO 2012/147422 (01.11.2012 Gazette 2012/44)**

(54) **MAT AND METHOD FOR MANUFACTURING THE SAME**

MATTE UND VERFAHREN ZU DEREN HERSTELLUNG

TAPIS ET PROCÉDÉ DE FABRICATION DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.04.2011 JP 2011099093**

(43) Date of publication of application:
**05.03.2014 Bulletin 2014/10**

(73) Proprietor: **Inoac Corporation
Nagoya-shi, Aichi 4500003 (JP)**

(72) Inventors:
• **NAKAO, Hiroshi
Anjo-shi
Aichi-ken (JP)**

• **ITAKURA, Atsuhiko
Shinshiro-shi
Aichi (JP)**

(74) Representative: **Hoffmann Eitle
Patent- und Rechtsanwälte PartmbB
Arabellastraße 30
81925 München (DE)**

(56) References cited:
**EP-A1- 2 000 488      EP-A2- 0 646 452
JP-A- 9 125 040      JP-A- 2008 525 289**

EP 2 702 906 B1

## Description

### Technical Field

The present invention relates to a mat that can be used as a building material such as a carpet underlay, or as a vehicle interior material, such as a parcel shelf, a trunk mat, a floor mat, a floor bulk-up material, a spacer, and the like.

### Background Art

As a cut chip recycled material for a vehicle carpet, a material disclosed in Patent Document 1 is known. For this cut chip recycled material for a vehicle carpet, a vehicle carpet backing material composition using a cut chip recycled material blended with an ethylene-vinyl acetate copolymer, a high-pressure low-density polyethylene, and an inorganic filler masterbatch is lined on a carpet substrate in a basis weight of 400 to 1200 g/m$^2$, and then after the carpet substrate is fused on a cushion material, the obtained material is shaped to be matched to a vehicle floor surface. The vehicle carpet has good rigidity and hardness, but is heavy in weight.

Patent Document 2 proposes a carpet, referred to as a shaped silencer, in which a felt is overlapped on a layer of the mixture of pulverized fragments of urethane resin foam and a binder and then shaped into a required shape. However, the carpet cannot be reduced in weight due to the use of the felt. Also, the felt and the layer of the mixture of pulverized fragments of urethane resin foam and the binder are laminated on top of one another, thereby increasing effort and time in shaping.

Patent Document 3 proposes a vehicle interior material in which a core material of a foam plastic is covered with a surface material produced from recycled material. The recycled material utilizes those obtained by separating, cutting and pulverizing interior materials from a vehicle scrapped. However, the core material of the foam plastic was not recycled and thus recycle ability of the wastes thereof was not sufficient.

Patent Document 4 proposes a polyurethane foam, in which pieces of a melamine foam is previously mixed in a raw solution for polyurethane forming and then foaming and curing a polyurethane foam, so that powers of the melamine foam are evenly dispersed. However, because pieces of the melamine foam is bulky, there is a problem in that it takes time and effort to mix and stir pieces of the melamine foam in the raw solution for polyurethane foaming at a production level. Also, if pieces of the melamine foam are finer, pieces of the melamine foam can be easily evenly mixed in the raw solution for polyurethane foaming, but when being finely pulverized, pieces of the melamine foam become dust, thereby deteriorating a working environment.

Also, a carpet underlay as building materials and a mat as vehicle interior materials are desirable to be good in heat insulation property, flame retardancy and sound absorption property. However, the mats as described above are not sufficient in at least one of lightweight property, hardness suitability, possibility of using waste materials, heat insulation property, flame retardancy, and sound absorption property.

Patent Document 5 discloses a fire-resistant moulded composite comprising pulverized fragments of a melamine resin foam, and a moisture curable isocyanate compound bonding the resin foam pulverized fragments to each other.

### Prior Art Documents

### Patent Documents

Patent Document 1: JP 2000-52836 A
Patent Document 2: JP H9-202169 A
Patent Document 3: JP 2003-063319 A
Patent Document 4: JP 2005-8714 A
Patent Document 5 : EP 2000488 A1

## Summary of Invention

### Problem to be Solved by Invention

Accordingly, the present invention has been made in view of the above, and it is an object thereof to provide a mat and a method for manufacturing the same, that is lightweight, has a suitable hardness, and is good in heat insulation property, sound absorption property and flame retardancy, and in addition, can utilize waste materials, and can be used as a building material, such as a carpet underlay, or as a vehicle interior material, such as a parcel shelf, a trunk mat, a floor mat, a floor bulk-up material, a spacer, and the like,.

## Means for Solving the Problem

According to the present invention, there is provided a mat comprising resin foam pulverized fragments including pulverized fragments of a melamine resin foam, and a moisture curable isocyanate compound bonding the resin foam pulverized fragments to each other.

In the mat described above, the resin foam pulverized fragments further include pulverized fragments of a polyurethane resin foam.

In the mat described above, a proportion of the pulverized fragments of the melamine resin foam with respect to the resin foam pulverized fragments may be 10 wt% or more.

In the mat described above, a density of the melamine resin foam may be in a range of 5 kg/m$^3$ to 18 kg/m$^3$, a density of the polyurethane resin foam may be in a range of 13 kg/m$^3$ to 40 kg/m$^3$, and a density of the mat may be in a range of 23 kg/m$^3$ to 110 kg/m$^3$.

In the mat described above, the largest particle diameter of the resin foam pulverized fragments may be in a range of 3 mm to 30 mm.

According to the present invention, there is provided a method for manufacturing a mat, including adhering a moisture curable isocyanate compound on resin foam pulverized fragments including pulverized fragments of a melamine resin foam; and curing the moisture curable isocyanate compound to bond the resin foam pulverized fragments to each other, thereby obtaining the mat.

In the method described above, the moisture curable isocyanate compound may be cured in a state in which the resin foam pulverized fragments with the moisture curable isocyanate compound adhered thereto are compressed.

In the method described above, the resin foam pulverized fragments further include pulverized fragments of a polyurethane resin foam.

In the method, a proportion of the pulverized fragments of the melamine resin foam with respect to the resin foam pulverized fragments may be 10 wt% or more.

In the method described above, a density of the melamine resin foam may be in a range of 5 kg/m$^3$ to 18 kg/m$^3$, a density of the polyurethane resin foam may be in a range of 13 kg/m$^3$ to 40 kg/m$^3$, and a density of the mat may be in a range of 23 kg/m$^3$ to 110 kg/m$^3$.

In the method described above, a largest particle diameter of the resin foam pulverized fragments may be in a range of 3 mm to 30 mm.

## Advantageous Effects of Invention

According to the mat of the present invention, the mat is configured such that the resin foam pulverized fragments, including pulverized fragments of a melamine resin foam, are bonded to each other by the moisture curable isocyanate compound. Therefore, due to the resin foam pulverized fragments, the mat is lightweight, is good in heat insulation property, sound absorption property, and has a suitable hardness. Also, because the melamine resin foam has a good flame retardancy, flame retardancy of the mat including the melamine resin foam is also good. In addition, as the resin foam pulverized fragments including the pulverized fragments of the melamine resin foam, those obtained by pulverizing the wastes of the resin foams can be used, thereby reducing industrial wastes and saving resources.

Also, according to the present invention, the resin foam pulverized fragments include pulverized fragments of a polyurethane resin foam, and thus hardness of the mat can be adjusted and the wastes of the polyurethane resin foam can be also used. Further, according to the present invention, the proportion of the pulverized fragments of the melamine resin foam is 10 wt% or more, thereby achieving a good flame retardancy of the mat. In addition, according to the present invention, the density of the melamine resin foam and the density of the polyurethane resin foam are set to specific ranges, thereby providing a lightweight mat having a suitable hardness.

Also, according to the present invention, it is possible to prevent a situation in which the resin foam pulverized fragments are too small such that adhesion of the moisture curable isocyanate compound is difficult, or become a powder form so that a working environment is deteriorated. In addition, it is possible to prevent a situation in which the resin foam pulverized fragments are too large such that the resin foam pulverized fragments cannot withstand a stress concentration during use of the mat, and as a result, the mat is partially dented or damaged. Herein, the phrase "a particle diameter of the resin foam pulverized fragments is in a range of 3 mm to 30 mm" means, in other words, that "a dimension of the largest portion of the resin foam pulverized fragment particles is in a range of 3 mm to 30 mm." Namely, this means that a portion having a largest diameter (dimension) in one fragment of the resin foam is in a range of 3 mm to 30 mm.

According to the method for manufacturing a mat of the present invention, a mat that is lightweight, has a suitable hardness, and is good in heat insulation property, sound absorption property and flame retardancy, and in addition, can utilize waste materials, can be easily manufactured while suppressing deterioration of a working environment.

Also, according to the present invention, the moisture curable isocyanate compound is cured in a state in which the resin foam pulverized fragments with the moisture curable isocyanate compound adhered thereto are compressed. As a result, the resin foam pulverized fragments can be firmly bonded to each other.

Also, according to the present invention, the resin foam pulverized fragments include pulverized fragments of a polyurethane resin foam, and thus hardness of the mat can be adjusted and the wastes of the polyurethane resin foam can be also used. Further, according to the present invention, the proportion of the pulverized fragments of the melamine resin foam is 10 wt% or more, thereby achieving a good flame retardancy of the mat. In addition, according to the present invention, the density of the melamine resin foam and the density of the polyurethane resin foam are set to specific ranges, thereby providing a lightweight mat having a suitable hardness.

Also, according to the present invention, it is possible to prevent a situation in which the resin foam pulverized fragments are too small such that adhesion of the moisture curable isocyanate compound is difficult, or become a powder form so that a working environment is deteriorated. In addition, it is possible to prevent a situation in which the resin foam pulverized fragments are too large such that the resin foam pulverized fragments cannot withstand a stress concentration during use of the obtained mat, and as a result, the mat is partially dented or damaged.

## Brief Description of Drawings

Fig. 1 is a perspective view of a mat according to an embodiment of the present invention.
Fig. 2 is a schematic cross sectional view of pulverized fragments of a resin foam with a moisture curable isocyanate compound adhered thereto.
Fig. 3 is a cross sectional view of an example of a mold into which the pulverized fragments of the resin foam with the moisture curable isocyanate compound adhered thereto has been loaded.
Fig. 4 illustrates cross sectional views of an example of the mold during a compressing and heating step and the resulted mat.
Fig. 5 is a diagram illustrating a maximum dimension of the pulverized fragment of the resin foam.

## Description of Embodiments

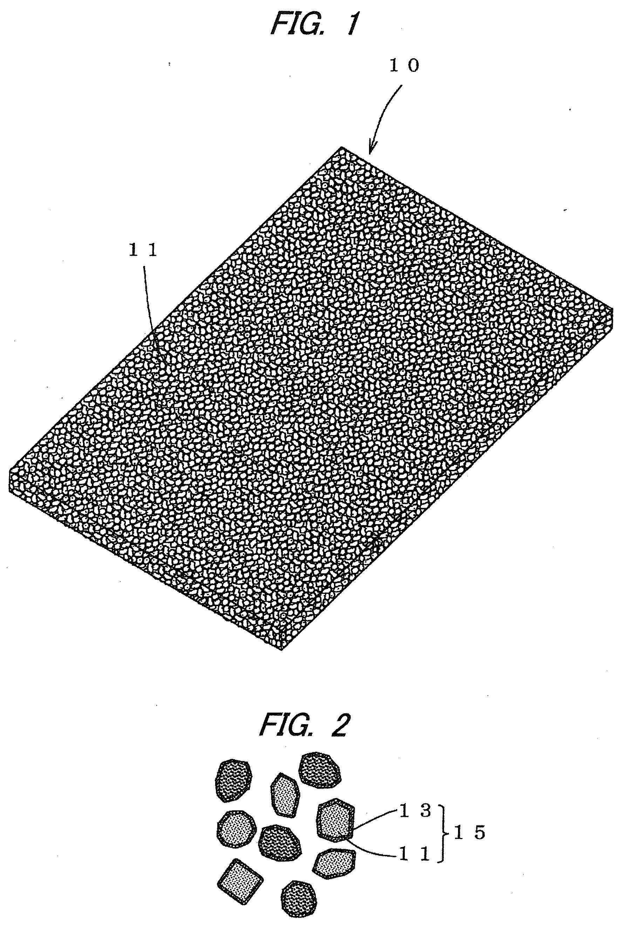

A mat according to an embodiment of the present invention will be now described. A mat 10 shown in Fig. 1 can be used as building materials, such as a carpet underlay, vehicle interior materials, such as a parcel shelf, a trunk mat, a floor mat, and a floor bulk-up material, and the like. The mat 10 is made of resin foam pulverized fragments 11 including pulverized fragments of a melamine resin foam, which are bonded to each other by a moisture curable isocyanate compound.

A thickness of the mat 10 is appropriately determined by an application of the mat 10 and the like. For example, the thickness of the mat 10 may be approximately 10 to 50 mm. Also, a density of the mat 10 (conforming to JIS K 7222) is preferably in a range of 23 kg/m$^3$ to 110 kg/m$^3$ to obtain a suitable rigidity as a mat.

The mad 10 is not limited to a flat plate shape as shown in Fig. 1, but may have any shapes. For example, the mat can be formed to have a shape represented by vehicle interior materials, such as a floor mat, which have unevenness, bending and the like, using a mold. Alternatively, the mat may have a plate-like shape obtained by manufacturing a product of a block shape (e.g., 1000 width $\times$ 1500 length $\times$ 400 mm height) and then applying horizontal slicing, vertical cutting or the like to the resulted block.

The melamine resin foam is obtained by adding components, such as an emulsifier and a curing agent, to a resin composition containing a melamine formaldehyde condensate and a foaming agent, heating and foaming to above a boiling point of the foaming agent, and then curing the resulted foam. Methods for producing a melamine resin foam are publicly known, and are described in JP 55-142628 A and JP 56-152848 A.

A density of the melamine resin foam (conforming to JIS K 7222) may be in a range of 5 kg/m$^3$ to 18 kg/m$^3$, more preferably in a range of 7 kg/m$^3$ to 13 kg/m$^3$. If the density value is less than 5 kg/m$^3$, production of the melamine resin foam is itself difficult and also the hardness thereof becomes lower. If the density value is more than 18 kg/m$^3$, the production of the melamine resin foam is possible, but an advantage of lightweight thereof is lost.

Pulverized fragments of the melamine resin foam are obtained by pulverizing a newly produced melamine resin foam or wastes of the melamine resin foam by means of a known pulverizing apparatus. As the wastes of the melamine resin foam, waste products made of the melamine resin foam, wastes including the rest of the melamine resin foam, from which a predetermined shaped product has already been cut, or the like can be used.

A particle diameter of the resin foam pulverized fragments 11 including the pulverized fragments of the melamine resin foam is preferably in a range of 3 mm to 30 mm (a dimension of the largest portion thereof is in the range of 3 mm to 30 mm). If the diameter is smaller than 3 mm, the resin foam pulverized fragments become a powder shape, so that adhesion of the moisture curable isocyanate compound is difficult. Meanwhile, if the diameter is greater than 30 mm, the resin foam pulverized fragments cannot withstand a stress concentration during use of the mat, so that a region of the mat 10, in which the pulverized fragments 11 of the melamine resin foam is included, is bent to form a dent, thereby leading to a risk of damaging the mat.

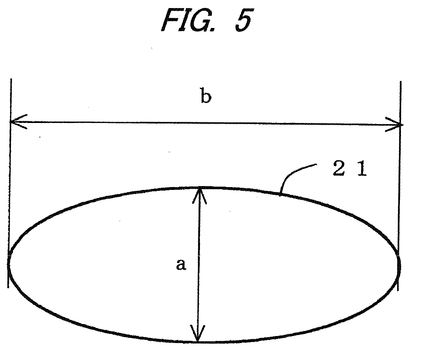

Herein, the phrase "a particle diameter of the resin foam pulverized fragments is in a range of 3 mm to 30 mm" means, in other words, that "a dimension of the largest portion of the resin foam pulverized fragment particles is in a range of 3 mm to 30 mm." Namely, this means that a portion having a largest diameter (dimension) in one fragment of the resin foam is in a range of 3 mm to 30 mm. Accordingly, if the resin foam pulverized fragment 21 is an oval shape, for example as shown in Fig. 5, that a largest particle diameter of the resin foam pulverized fragment 21 is in a range of 3 mm to 30 mm means that, instead of a value of a minor diameter **a**, a value of a major diameter **b** corresponding to a portion having a largest dimension is in a range of 3 mm to 30 mm.

A proportion of the pulverized fragments of the melamine resin foam with respect to the resin foam pulverized fragments is preferably 10 wt% or more. The resin foam pulverized fragments may be provided by only the pulverized fragments of the melamine resin foam. That is, the proportion of the pulverized fragments of the melamine resin foam with respect to the resin foam pulverized fragments is preferably in a range of 10 wt% to 100 wt%. If the proportion of the pulverized fragments of the melamine resin foam is smaller than 10 wt%, lightweight property and flame retardancy of the mat become poor.

In addition to the pulverized fragments of the melamine resin foam, the resin foam pulverized fragments include pulverized fragments of other resin foams, such as polyolefin-based resin foam or polyurethane resin foam. In particular, pulverized fragments of the polyurethane resin foam are included to improve durability of the mat. Similarly to the pulverized fragments of the melamine resin foam, pulverized fragments of other resin foams have also preferably a particle diameter in a range of 3 mm to 30 mm (a dimension of the largest portion thereof is in the range of 3 mm to 30 mm).

In addition, the polyurethane resin foam is obtained by adding a catalyst, a foam stabilizer, a foaming agent and the like to polyol and isocyanate, mixing and stirring, and then by heating and curing. The polyurethane resin foam may be produced by any methods, such as one-shot method or prepolymer method. Also, the polyurethane resin foam may be any of polyester-based polyurethane resin foams and polyether-based polyurethane resin foam. In addition, the polyurethane resin foam may be any of hard polyurethane resin foams, semi-hard polyurethane resin foams, and molded polyurethane resin foams.

Among others, a soft slab foam is preferable because the soft slab foam can be easily pulverized, can be compression molded at a high compression rate, and has a proven track record to be used as vehicle interior materials. A density of the polyurethane resin foam (conforming to JIS K 7222) is preferably in a range of 13 kg/m$^3$ to 40 kg/m$^3$. If less than 13 kg/m$^3$, the hardness thereof becomes lower. On the other hand, if more than 40 kg/m$^3$, the weight thereof is increased.

The pulverized fragments of the polyurethane resin foam are obtained by pulverizing a newly produced polyurethane resin foam or wastes of the polyurethane resin foam by means of a known pulverizing apparatus. As the wastes of the polyurethane resin foam, waste products made of the polyurethane resin foam, wastes including the rest of the polyurethane resin foam, from which a predetermined shaped product has already been cut, or the like can be used.

The moisture curable isocyanate compound is a compound curable by moisture and can include methylene diphenyl diisocyanate (MDI) or the prepolymer (MDI prepolymer), or toluene diisocyanate (TDI) or the prepolymer thereof (TDI prepolymer).

An amount of the moisture curable isocyanate compound relative to the resin foam pulverized fragments is preferably in a range of 5 parts by weight or more and less than 40 parts by weight with respect to 100 parts by weight of the resin foam pulverized fragments, more preferably in a range of 10 parts by weight or more and less than 20 parts by weight. If less than 5 parts by weight, adhesive strength between the resin foam pulverized fragments becomes lower, thereby leading to a risk that the resin foam fragments are separated from each other during use of the mat 10. On the other hand, if 40 parts by weight or more, the moisture curable isocyanate compound is too much relative to the resin foam pulverized fragments, so that moisture curable isocyanate compound, which does not contribute to the adhesion between the resin foam pulverized fragments, is present. As a result, weight reduction of the mat is difficult to be obtained, and at the same time the cost thereof is increased. In addition, sound absorption property, particularly in a medium and high frequency region (2000 to 4000 Hz), becomes poor.

The mat 10 is obtained by adhering the moisture curable isocyanate compound to the resin foam pulverized fragments and then curing the moisture curable isocyanate compound by moisture so that the resin foam pulverized fragments are bonded to each other.

Hereinafter, a process for manufacturing the mat 10 will be described in detail. The process for manufacturing the mat 10 is performed by a pulverizing step, an adhering step, and a bonding step. In the pulverizing step, the melamine resin foam is pulverized by a known pulverizing apparatus until the particle diameter becomes a predetermined value, preferably in a range of 3 mm to 30 mm (a dimension of the largest portion thereof is in the range of 3 mm to 30 mm).

Any other resin foams are also pulverized until the particle diameter becomes a predetermined value, preferably in a range of 3 mm to 30 mm (a dimension of the largest portion thereof is in the range of 3 mm to 30 mm).

The foams are preferably separately pulverized to prevent the foams from being mixed with each other. Also, such pulverized fragments having a predetermined particle diameter can be obtained by previously setting a value of a pulverized particle diameter in the pulverizing apparatus, or separating by a filter after pulverizing.

In the adhering step, the moisture curable isocyanate compound is adhered to the resin foam pulverized fragments. An operation for adhering the moisture curable isocyanate compound on the resin foam pulverized fragments can employ, for example, the following methods: (1) a method in which the moisture curable isocyanate compound is spray applied on the resin foam pulverized fragments; (2) a method in which the moisture curable isocyanate compound is spray applied on the resin foam pulverized fragments and then the moisture curable isocyanate compound and the resin foam pulverized fragments are mixed by a blender; or (3) a method in which the moisture curable isocyanate compound and the resin foam pulverized fragments are introduced into and mixed by a blender.

In this time, an amount of the pulverized fragments of the melamine resin foam is 10 wt% or more with respect to 100 wt% of the resin foam pulverized fragments. An amount of the moisture curable isocyanate compound added to the resin foam pulverized fragments is preferably in a range of 5 parts by weight or more and less than 40 parts by weight with respect to 100 parts by weight of the resin foam pulverized fragments, more preferably in a range of 10 parts by weight or more and 20 parts by weight or less. By such an adhering step, resin foam pulverized products 15 in which the moisture curable isocyanate compound 13 is adhered to the resin foam pulverized fragments 11 as shown in Fig. 2 are obtained.

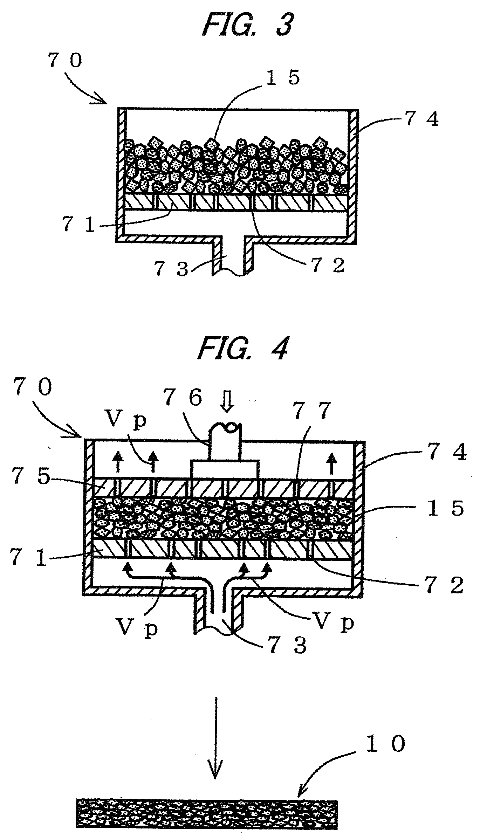

In the bonding step, by curing the moisture curable isocyanate compound adhered to the resin foam pulverized fragments, the resin foam pulverized fragments are bonded to each other, thereby forming the mat. According to the bonding step, the resin foam pulverized products 15 with the moisture curable isocyanate compound adhered thereto obtained in the adhering step are measured and then a desired amount thereof is introduced into a mold 70 as shown in Fig. 3.

As shown in Figs. 3 and 4, the mold 70 includes a frame body 74 having a steam inlet 73 on a lower surface thereof, a bottom plate 71 disposed and fixed in the frame body 74, and a press die 75 (shown in Fig. 4) adapted to be lifted relative to the bottom plate 71. Steam passages 72 and 77 are respectively formed to extend through the bottom plate 71 and the press die 75 in a vertical direction.

The frame body 74 is provided with a stopper (not shown) for limiting the lowest position of the press die 75. When the press die 75 is lowered by a predetermined amount, the press die 75 strikes against the stopper, so that the stopper prevents the press die 75 from being further lowered. By adjusting a vertical position of the stopper, the lowest position of the press die 75, i.e., a distance (corresponding to a thickness of a molded article) between the bottom plate 71 and the press die 75 can be adjusted.

Next, as show in Fig. 4, the press die 75 is lowered by a pressing device 76, so that the resin foam pulverized products 15 with the moisture curable isocyanate compound adhered thereto are compressed between the bottom plate 71 and the press die 75.

During compressing, a steam Vp is introduced from an external steam supply device (not shown) through the steam inlet 73 on the lower surface of the mold 70 into the mold 70. The steam Vp supplied in this way enters between the bottom plate 71 and the press die 75 through the steam passage 72 of the bottom plate 71. When passing through between the resin foam pulverized products 15 with the moisture curable isocyanate compound adhered thereto disposed between the bottom 71 and the press die 75, the steam Vp is contacted with the moisture curable isocyanate compound so that the moisture curable isocyanate compound is cured and thus the resin foam pulverized fragments 11 are bonded to each other. Then, the steam Vp is discharged through the steam passage 77 of the press die 75 to the outside. Due to bonding between the resin foam pulverized fragments, a plate-shaped molded article is formed between the bottom plate 71 and the press die 75. Then, the mold 70 is opened and the molded article is removed therefrom, thereby obtaining the mat 10 made of the molded article.

In addition, a density of the obtained mat can become a desired value, by adjusting a distance between the bottom plate 71 and the press die 75 of the mold 70 so that a volume between the bottom plate 71 and the press die 75 becomes a predetermined value and also by adjusting a weight of the resin foam pulverized fragments introduced into the mold 70.

Depending on shape and size of the mold 70, the mat 10 may be also obtained by cutting the article removed therefrom into a predetermined thickness or external dimensions. Also, the shape of the mat to be manufactured is not limited to a flat plate shape, but may be a bended shape or an unevenness shape. By shaping the opposing surfaces of the bottom plate 71 and the press die 75 into a shape of the mat aimed, a mat having a desired shape can be molded.

Examples

Next, mats of Examples 1 and 2 not according to the present invention as described above, Examples 3 to 17 according to the present invention as described above, and mats of Comparative Examples 1 to 8 were manufactured. The results obtained by evaluating properties thereof are shown Tables 1 and 2.

Firstly, a melamine resin foam 1 having a density of 9.5 kg/m$^3$ ('Basotect', a trade name, produced by BASF), a melamine resin foam 2 having a density of 7.0 kg/m$^3$ (a trial product produced by the applicant using techniques disclosed in JP 56-152848 A and the like), a polyurethane resin foam 1 having a density of 25 kg/m$^3$ ('ECA', a trade name, produced by INOAC CORPORATION), and a polyurethane resin foam 2 having a density of 35 kg/m$^3$ ('ER-26', a trade name, produced by INOAC CORPORATION) were respectively pulverized by a pulverizing apparatus having cutting edges of a width corresponding to a predetermined pulverizing size, thereby forming fragments having a maximum particle diameter of 3 mm, 5 mm, 10 mm, 15 mm and 30 mm. The particle diameter of the pulverized fragments was previously set in the pulverizing apparatus. Meanwhile, the density of each of the resin foams shown in Tables 1 and 2 represents a density before pulverizing.

Then, the pulverized fragments were introduced into a vessel having a stirring device. In addition, a liquid moisture curable isocyanate compound was sprayed in a mist shape into the vessel by a spraying device, and then mixed and stirred, so that the moisture curable isocyanate compound was adhered to the pulverized fragments. Ratios between the pulverized fragments and the liquid moisture curable isocyanate compound were ratios as shown in Tables 1 and 2. Also, two types of the moisture curable isocyanate compound, i.e., TDI system and MDI system, prepared as follows were used.

For the TDI-based moisture curable isocyanate compound, toluene diisocyanate (TDI) of 20 parts by weight ('Sumidur T-80', a trade name, produced by Sumika Bayer Urethane Co., Ltd. and having an isocyanate group content of 48%), polyether polyol of 100 parts by weight ('SANNIX GP-3000', a trade name, produced by Sanyo Chemical Industries, Ltd. and having a hydroxyl value of 56 and three functional groups), and methylene chloride of 40 parts by weight as a diluent (produced by Tokuyama Corporation and having a molecular weight of 85 and a boiling point of 40 °C) were used. Firstly, TDI was introduced into a reaction vessel, whose temperature can be controlled, and then while keeping a liquid temperature to 30±5 °C, the polyol and the diluent were added in small portions over 30 minutes during stirring to form a prepolymer, thereby preparing the TDI-based moisture curable isocyanate compound.

For the MDI-based moisture curable isocyanate compound, polymeric-methylene diisocyanate (p-MDI) of 100 parts by weight ('Lupranate M-12S', a trade name, produced by BASF and having an isocyanate group content of 30.7% and a viscosity at 25 °C of 111 mPa·s), polyether polyol of 30 parts by weight ('SANNIX PP2000', a trade name, produced by Sanyo Chemical Industries, Ltd. and having a hydroxyl value of 56 and two functional groups), and diisononyl adipate of 20 parts by weight as a diluent ("DINA", a trade name, produced by DAIHACHI Chemical Industry Co., Ltd. and having a molecular weight of 398 and a boiling point of 227 °C (but, the pressure is 0.27 kPa)) were used. Firstly, MDI was introduced into a reaction vessel, whose temperature can be controlled, and then while keeping a liquid temperature to 30±5 °C, the polyol and the diluent were added in small portions over 30 minutes during stirring to form a prepolymer, thereby preparing the MDI-based moisture curable isocyanate compound.

The pulverized fragments with the moisture curable isocyanate compound adhered thereto obtained by adding the moisture curable isocyanate compound in ratios shown in Tables 1 and 2 were introduced into the mold in Fig. 3 having a dimension of 450×450×50 mm in a charging weight to the mold as described below. After being introduced, the press die of the mold was lowered and in this state, steam was supplied into the mold. Supplying of the steam and compression by the press die were continued during 5 minutes to cure the moisture curable isocyanate compound, so that the pulverized fragments were bonded to each other, thereby forming a molded article.

Then, the molded article was removed form the mold and dried naturally at a room temperature, and as a result, the mats according to Examples and Comparative Examples were obtained. Meanwhile, each of the opposing surfaces of the bottom plate and the press plate of the mold is a square flat surface of 450 mm × 450 mm.

A charging weight, in which the pulverized fragments with the moisture curable isocyanate compound adhered thereto are introduced into the mold, is obtained by multiplying a product density (hereinafter, referred to as a set target density) assumed during design by a volume within the mold, as shown by the following equation.

$$\text{A charging weight to the mold} = (\text{set target density}) \times (\text{volume within the mold})$$

Also, a charging density as shown in Tables 1 and 2 is a value calculated from a density of melamine resin foam, a density of urethane resin foam and the like according to the following equation.

$$A \text{ charging density} = \{(\text{density of melamine resin foam}) \times (\text{charging weight of melamine resin foam}) + (\text{density of urethane resin foam}) \times (\text{charging weight of urethane resin foam})\} \div \{(\text{charging weight of melamine resin foam}) + (\text{charging weight of urethane resin foam})\}$$

In addition, a material compression rate refers to a percentage obtained by dividing the set target density by the charging density.

A material compression rate = (set target density) ÷ (charging density) × 100

Namely, the charging density is a calculation density when the melamine resin foam and the polyurethane resin foam are mixed, and the final product density can be estimated by compressing the calculation density in a predetermined ratio. Alternatively, the material compression rate can be obtained by determining the set target density and then dividing the set target density by the charging density.

Examples 1 and 2 are examples in which the resin foam pulverized fragments include only pulverized fragments of the melamine resin foam 1, but material compression rates thereof are different from each other. Examples 3 and 4 are examples in which the set target density is set to 30 kg/m$^3$, and pulverized fragments of the melamine resin foam 1 and pulverized fragments of the polyurethane resin foam 1 are used but ratios thereof are different from each other. Comparative Example 1 is an example in which the resin foam pulverized fragments include only pulverized fragments of the polyurethane resin foam 1. Examples 5 and 6 are examples in which the set target density is set to 50 kg/m$^3$, and pulverized fragments of the melamine resin foam 1 and pulverized fragments of the polyurethane resin foam 1 are used but ratios thereof are different from each other. Example 7 is an example in which pulverized fragments of the melamine resin foam 2 is used instead of the pulverized fragments of the melamine resin foam 1 in Example 6. Example 8 is an example in which the same mixed material as that in Example 6 is used, but a particle diameter of the melamine resin foam 1 is set to max 30 mm and a particle diameter of the polyurethane resin foam 1 is set to max 10 mm. Example 9 is an example in which the same melamine resin foam as that in Example 8 is used but the polyurethane resin foam 1 is replaced with the polyurethane resin foam 2 and the largest particle diameter thereof is set to 15 mm.

Example 10 is an example in which an amount of pulverized fragments of the melamine resin foam 1 is 10 parts by weight and an amount of pulverized fragments of the polyurethane resin foam 1 is 90 parts by weight. Comparative Example 2 is an example in which the set target density is set to be approximately equal to that in Example 10 and the pulverized fragments include only pulverized fragments of the polyurethane resin foam 1. Comparative Example 3 is an example in which pulverized fragments of the polyurethane resin foam 2 is used instead of the pulverized fragments of the polyurethane resin foam 1 in Comparative Example 2. Example 11 is an example in which composition of the pulverized fragments is the same as that in Example 6, but a particle diameter of the melamine resin foam 1 is set to max 10 mm and the moisture curable isocyanate compound is changed from TDI system to MDI system. Examples 12 and 14 are examples in which compositions of the pulverized fragments are the same as that in Example 6, but the set target densities are respectively set to 80 kg/m$^3$ and 100 kg/m$^3$. Example 13 is an example in which composition of the pulverized fragments is the same as that in Example 11, but the set target density is set to 80 kg/m$^3$. Comparative Example 4 is an example in which only the polyurethane resin foam 1 is used for the pulverized fragments in Example 14. Example 15 is an example in which pulverized fragments of the polyurethane resin foam 2 is used instead of the pulverized fragments of the polyurethane resin foam 1 in Example 10, and the material compression rate is set to 308%. Comparative Example 5 is an example in which only pulverized fragments of the polyurethane resin foam 2 is used as the resin foam pulverized fragments. Comparative Example 6 represents general physical properties of a sheet (a thickness of 50 mm) of the melamine resin foam 1.

Example 16 is an example in which composition of the pulverized fragments is the same as that in Example 8, but a mixing amount of the moisture curable isocyanate compound is changed. An amount of the TDI-based moisture curable isocyanate compound was 40 parts by weight with respect to 100 parts by weight of the resin foam pulverized fragments. Because the addition amount of the moisture curable isocyanate compound was much, it took time to adhere the moisture curable isocyanate compound on the pulverized fragments, when a spray application was used. Therefore, the spray application was not performed, but after the resin foam pulverized fragments has been directly introduced into a blender, the moisture curable isocyanate compound was introduced into the blender in small portions and mixed while being careful for partial soakage. Other conditions were the same as those in Example 8. Example 17 is an example in which composition of the pulverized fragments is the same as that in Example 11, but an amount of the MDI-based moisture curable isocyanate compound is 40 parts by weight with respect to 100 parts by weight of the resin foam pulverized fragments and, in the same manner as that in Example 16, the moisture curable isocyanate compound is directly introduced and mixed into a blender after the pulverized fragments has been introduced into the blender. Other conditions were the same as those in Example 8.

**Table 1**

| | | Example 1 | Example 2 | Example 3 | Example 4 | Comparative Example 1 | Example 5 | Example 6 | Example 7 | Example 8 | Example 9 |
|---|---|---|---|---|---|---|---|---|---|---|---|
| Melamine Resin Foam 1 | Density [kg/m³] | 9.5 | 9.5 | 9.5 | 9.5 | - | 9.5 | 9.5 | - | 9.5 | 9.5 |
| | Number of Parts Added [part by weight] | 100 | 100 | 50 | 20 | - | 50 | 25 | - | 25 | 25 |
| | Particle Diameter [mm] | 15 | 15 | 15 | 15 | - | 15 | 15 | - | 30 | 30 |
| Melamine Resin Foam 2 | Density [kg/m³] | - | - | - | - | - | - | - | 6.9 | - | - |
| | Number of Parts Added [part by weight] | - | - | - | - | - | - | - | 25 | - | - |
| | Particle Diameter [mm] | - | - | - | - | - | - | - | 15 | - | - |
| Polyurethane Resin Foam 1 | Density [kg/m³] | - | - | 25 | 25 | 25 | 25 | 25 | 25 | 25 | - |
| | Number of Parts Added [part by weight] | - | - | 50 | 80 | 100 | 50 | 75 | 75 | 75 | - |
| | Particle diameter [mm] | - | - | 5 | 5 | 5 | 5 | 5 | 5 | 10 | - |
| Polyurethane Resin Foam 2 | Density [kg/m³] | - | - | - | - | - | - | - | - | - | 35 |
| | Number of Parts Added [part by weight] | - | - | - | - | - | - | - | - | - | 75 |
| | Particle Diameter [mm] | - | - | - | - | - | - | - | - | - | 15 |
| Moisture Curable Isocyanate Compound - Number of Parts Added | TDI System [part by weight] | 10 | 10 | 10 | 10 | 10 | 10 | 10 | 10 | 15 | 10 |
| | MDI System [part by weight] | - | - | - | - | - | - | - | - | - | - |

(continued)

| | Example 1 | Example 2 | Example 3 | Example 4 | Comparative Example 1 | Example 5 | Example 6 | Example 7 | Example 8 | Example 9 |
|---|---|---|---|---|---|---|---|---|---|---|
| Charging Density[kg/m³] | 9.5 | 9.5 | 17.3 | 21.9 | 25 | 17.3 | 21.1 | 20.5 | 21.1 | 28.6 |
| Set Target Density[kg/m³] | 25 | 30 | 30 | 30 | 30 | 50 | 50 | 50 | 50 | 50 |
| Material Compression Rate[%] | 263 | 316 | 174 | 137 | 120 | 290 | 237 | 244 | 237 | 175 |

Table 2

| | | Example 10 | Comparative Example 2 | Comparative Example 3 | Example 11 | Example 12 | Example 13 | Example 14 | Comparative Example 4 | Example 15 | Comparative Example 5 | Comparative Example 6 | Example 16 | Example 17 |
|---|---|---|---|---|---|---|---|---|---|---|---|---|---|---|
| Melamine Resin Foam 1 | Density [kg/m³] | 9.5 | - | - | 9.5 | 9.5 | 9.5 | 9.5 | - | 9.5 | - | 9.5 (foam) | 9.5 | 9.5 |
| | Number of Parts Added [part by weight] | 10 | - | - | 25 | 25 | 25 | 10 | - | 10 | - | - | 25 | 25 |
| | Particle Diameter [mm] | 15 | - | - | 10 | 15 | 10 | 15 | - | 15 | - | - | 30 | 10 |
| Melamine Resin Foam 2 | Density [kg/m³] | - | - | - | - | - | - | - | - | - | - | - | - | - |
| | Number of Parts Added [part by weight] | - | - | - | - | - | - | - | - | - | - | - | - | - |
| | Particle Diameter [mm] | - | - | - | - | - | - | - | - | - | - | - | - | - |
| Polyurethane Resin Foam 1 | Density [kg/m³] | 25 | 25 | - | 25 | 25 | 25 | 25 | 25 | - | - | - | 25 | 25 |
| | Number of Parts Added [part by weight] | 90 | 100 | - | 75 | 75 | 75 | 90 | 100 | - | - | - | 75 | 75 |
| | Particle Diameter [mm] | 5 | 5 | - | 5 | 5 | 5 | 5 | 5 | - | - | - | 10 | 5 |

EP 2 702 906 B1

11

| | | Example 10 | Comparative Example 2 | Comparative Example 3 | Example 11 | Example 12 | Example 13 | Example 14 | Comparative Example 4 | Example 15 | Comparative Example 5 | Comparative Example 6 | Example 16 | Example 17 |
|---|---|---|---|---|---|---|---|---|---|---|---|---|---|---|
| Polyurethane Resin Foam 2 | Density [kg/m$^3$] | - | - | 35 | - | - | - | - | - | 35 | 35 | - | - | - |
| | Number of Parts Added [part by weight] | - | - | 100 | - | - | - | - | - | 90 | 100 | - | - | - |
| | Particle Diameter [mm] | - | - | 5 | - | - | - | - | - | 3 | 3 | - | - | - |
| Moisture Curable Isocyanate Compound - Number of Parts Added | TDI System [part by weight] | 10 | 10 | 10 | - | 10 | - | 10 | 10 | 10 | 10 | - | 40 | - |
| | MDI System [part by weight] | - | - | - | 20 | - | 20 | - | - | - | - | - | - | 40 |
| Charging Density [kg/m$^3$] | | 23.5 | 25.0 | 35.0 | 21.1 | 21.1 | 21.1 | 23.5 | 25.0 | 32.5 | 35.0 | - | 21.1 | 21.1 |
| Set Target Density[kg/m$^3$] | | 50 | 50 | 50 | 50 | 80 | 80 | 100 | 100 | 100 | 100 | - | 50 | 50 |
| Material Compression Rate[%] | | 213 | 200 | 143 | 237 | 379 | 379 | 426 | 400 | 308 | 286 | - | 237 | 237 |

EP 2 702 906 B1

With respect to the mats according to each of Examples and Comparative Examples obtained in this way, productivity, density (JIS K 7222), 25% compression hardness (25 % CLD, unit: kPa, conforming to JIS K6400), rebound resilience (unit: %, conforming to JIS K 6400-3), sound absorption coefficient (JIS A 1405-2, a transfer function method), thermal conductivity at a room temperature (JIS A 1412-2: a heat flow meter method), and flame retardancy (FMVSS-302) were measured. The measured results are shown in Tables 3 and 4.

With respect to the productivity, at the time of being removed from the mold, a case in which clearances in the molded body were so large that the pulverized fragments were not sufficiently bonded to each other and thus a product shape could not be kept is indicated as ×, a case in which the product shape could be kept, but densification of the pulverized fragments was occurred so that voids were partially present or adhesion of the pulverized fragments was partially low is indicated as Δ, and a case in which the product shape could be kept and at the same time, the pulverized fragments were substantially evenly distributed so that significant voids or an easy loss of the pulverized fragments was not occurred is indicated as o.

With respect to the sound absorption coefficient, a rate of sound absorption by an acoustic tube was evaluated by a transfer function method, as defined in JIS A 1405-2. For mats having a thickness of 20 mm, how much the sound from sound sources having respectively a frequency of 500 Hz, 1000 Hz, 2000 Hz, and 4000 Hz was absorbed by each of the mats was measured.

With respect to the flame retardancy, with a mat having a thickness of 10 mm, a case in which a combustion speed was less than 100 mm/min is indicated as Pass (passed), and a case in which the combustion speed was 100 mm/min or more is indicated as NG (failed).

AMENDMENTS FOR PROSECUTION IN THE EPO REGIONAL PHASE

Table 3

| | | Example 1 | Example 2 | Example 3 | Example 4 | Comparative Example 1 | Example 5 | Example 6 | Example 7 | Example 8 | Example 9 |
|---|---|---|---|---|---|---|---|---|---|---|---|
| Productivity | | ○ | ○ | ○ | ○ | × | ○ | ○ | ○ | ○ | ○ |
| Density [kg/m³] | | 24.5 | 29.2 | 32.2 | 33.1 | - | 49.8 | 18.8 | 49.5 | 49.3 | 51.2 |
| 25% CLD Hardness [kPa] | | 3.7 | 3.9 | 3.7 | 3.5 | - | 4.2 | 4 | 4.1 | 3.9 | 3.4 |
| Rebound Resilience [%] | | 53 | (53) | 48 | 44 | - | 53 | 52 | 50 | 53 | 51 |
| Normal Incident Sound Absorption Coefficient [%] | 500 Hz | 14 | 15.2 | 14.9 | 13.2 | N.D. | 16.2 | 15.1 | 14.2 | 15.3 | 13.8 |
| | 1000 Hz | 44.3 | 46.9 | 44.8 | 37.2 | N.D. | 47.2 | 43 | 44.3 | 43.3 | 41.5 |
| | 2000 Hz | 83.4 | 90.1 | 83.1 | 78 | N.D. | 85 | 83.1 | 84.2 | 84.3 | 83.2 |
| | 4000 Hz | 99.7 | 97 | 97.5 | 95 | N-D. | 99.3 | 95.7 | 96.3 | 94.2 | 94.3 |
| Thermal Conductivity [W/mK] | | 0.0314 | 0.0311 | 0.0322 | 0.0335 | N.D. | 0.0319 | 0.0331 | 0.0332 | 0.0332 | 0.0331 |
| Flame Retardancy | | Pass | Pass | Pass | Pass | NG | Pass | Pass | Pass | Pass | Pass |

Table 4

| | | Example 10 | Comparative Example 2 | Comparative Example 3 | Exampe 11 | Example 12 | Example 13 | Example 14 | Comparative Example 4 | Example 15 | Comparative Example 5 | Comparative Example 6 | Example 16 | Example 17 |
|---|---|---|---|---|---|---|---|---|---|---|---|---|---|---|
| Productivity | | ○ | Δ | × | ○ | ○ | ○ | ○ | ○ | ○ | ○ | - | Δ | Δ |
| Density [kg/m³] | | 50.5 | 50.6 | 49.1 | 50.2 | 81.5 | 82.0 | 103.1 | 105.0 | 101.5 | 102.1 | 9.5 | 65 | 62 |
| 25% CLD Hardness [kPa] | | 3.5 | 2.9 | (2.0) | 5.2 | 4.8 | 6.3 | 6.9 | 4.2 | 6.5 | 4.1 | 4.0 | 5.5 | 6.9 |
| Rebound Resilience [%] | | 47 | 43 | (32) | 43 | 45 | 45 | 46 | 43 | 46 | 45 | 68 | 43 | 35 |
| Normal Incident Sound Absorplion Coefficient [%] | 500 Hz | 14.9 | 12.9 | 9.5 | 14.9 | 17.0 | 17.2 | 23.9 | 19.3 | 20.0 | 17.5 | 11.7 | 15.5 | 15.1 |
| | 1000 Hz | 42.8 | 30.9 | 23.0 | 42.8 | 50.1 | 52.0 | 60.7 | 55.0 | 54.9 | 50.0 | 26.5 | 45.2 | 43.2 |
| | 2000 Hz | 84.0 | 68.6 | 43.0 | 84.0 | 93.2 | 95.1 | 97.1 | 94.4 | 95.1 | 87.0 | 44.8 | 77.6 | 77.2 |
| | 4000 Hz | 95.4 | 89.1 | 73.1 | 95.4 | 85.0 | 84.5 | 89.0 | 87.4 | 86.1 | 85.9 | 82.5 | 77.3 | 75.1 |
| Thermal Conductivity [W/mK] | | 0.0339 | 0.0343 | - | 0.0332 | 0.0334 | 0.0333 | 0.0343 | 0.0353 | 0.0350 | 0.0355 | 0.0329 | 0.0333 | 0.0334 |
| Flame Retardancy | | Pass | NG | NG | Pass | Pass | Pass | Pass | NAG | Pass | NG | Pass | Pass | Pass |

EP 2 702 906 B1

With respect to the productivity, in cases of mats of Examples 1 to 15, the pulverized fragments were substantially evenly distributed, so that significant voids or an easy loss of the pulverized fragments was not occurred and thus a good product shape could be formed. However, in a case of the mat of Comparative Example 2, the product shape could be kept, but densification of the pulverized fragments was occurred, so that voids were partially present or adhesion of the pulverized fragments was partially low. Also, in cases of the mats of Comparative Examples 1 and 3, clearances between the pulverized fragments were so large that the pulverized fragments were not sufficiently bonded to each other and thus the product shape could not be kept. Meanwhile, Comparative Example 1 could not keep a mat shape and as a result, the sound absorption coefficient and the thermal conductivity thereof could not been evaluated. Accordingly, the sound absorption coefficient and the thermal conductivity of Comparative Example 1 are indicated as "N.D. (Not Detected)" in Tables 3 and 4.

With respect to the density, in cases of Examples 1 to 15, a set target density was set to 25 to 100 kg/m$^3$ and products having an actual density of 24.5 to 103.1 kg/m$^3$ approximated to the set target density were obtained. Although variation in the weight of the products becomes larger when the products are lightweight, stable molded bodies were obtained even in cases of lightweight products having a density of 50 kg/m$^3$. On the other hand, in a case of Comparative Example 3 including only the pulverized fragments of the polyurethane resin foam, the pulverized fragments having a charging density of 35 kg/m$^3$ was compressed to a set target density of 50 kg/m$^3$, but contact between the pulverized fragments was little, so that clearances was occurred and a consistent quality of the product was not obtained. In addition, in cases of Examples 16 and 17, an amount of the moisture curable isocyanate compound was too much, so that even when being compressed and molded to a material compression rate obtained by calculation from a set target density, a density higher than the set target density was obtained, thereby causing deviation from the target. As a result, an amount of the moisture curable isocyanate compound is preferably in a range of 10 parts by mass or more and less than 40 parts by mass, more preferably in a range of 10 parts by mass or more and 20 parts by mass or less.

With respect to the hardness, when comparing Examples 5 to 11 to Comparative Examples 2 and 3, which all have a density of approximately 50 kg/m$^3$, Examples 5 to 11 are harder than Comparative Examples 2 and 3. Also, when comparing Examples 14 and 15 to Comparative Examples 4 and 5, which all have a density of approximately 100 kg/m$^3$, Examples 14 and 15 obtained mats harder than those of Comparative Examples 4 and 5. Accordingly, it could be found that a high hardness mat including melamine resin foam as pulverized fragments is obtained according to the present invention.

With respect to the sound absorption, as a density of a mad is increased, a sound absorption coefficient thereof is also increased. When comparing Examples 5 to 11 to Comparative Examples 2 and 3, which all have a density of approximately 50 kg/m$^3$, Examples 5 to 11 had a higher sound absorption coefficient in any frequencies than those of Comparative Examples 2 and 3, and in particular, had a sound absorption coefficient of 83% or higher at 2000 Hz and an excellent sound absorption coefficient of 94% or higher at 4000 Hz. Also, when comparing Examples 14 and 15 to Comparative Examples 4 and 5, which all have a density of approximately 100 kg/m$^3$, Examples 14 and 15 have a substantially higher sound absorption coefficient in any frequencies than those of Comparative Examples 4 and 5. Accordingly, it could be found that a mat including melamine resin foam as pulverized fragments and having a high sound absorption property is obtained according to the present invention. In addition, for each of Examples 16 and 17, an amount of the moisture curable isocyanate compound was too much as compared to Examples 8 and 11, so that porosity thereof was impaired, and in particular, a sound absorption coefficient in a medium and high frequency region (2000 to 4000 Hz) was lower than 78% and thus poor. In particular, Examples 16 and 17 had a poor sound absorption property in a high frequency region of 4000 Hz, compared to Examples 8 and 11.

With respect to the flame retardancy, all of Examples 1 to 17 were Pass (passed) in FMVSS-302, thereby exhibiting a good flame retardancy. In contrast, all of Comparative Examples 2, 3, 4 and 5 including only the pulverized fragments of the polyurethane resin foam were NG (failed). Accordingly, it could be found that a mat including melamine resin foam as pulverized fragments and being difficult to be burned is obtained according to the present invention.

With respect to the thermal conductivity, when comparing Examples 5 to 11 to Comparative Example 3, which all have a density of approximately 50 kg/m$^3$, Examples 5 to 11 had a lower thermal conductivity than that of Comparative Example 3. Also, when comparing Examples 14 and 15 to Comparative Examples 4 and 5, which all have a density of approximately 100 kg/m$^3$, Examples 14 and 15 had a lower thermal conductivity than those of Comparative Examples 4 and 5. Accordingly, it could be found that a mat including melamine resin foam as pulverized fragments and having an excellent heat insulation property is obtained according to the present invention.

In addition, Comparative Example 6 made of a melamine resin foam sheet had an inferior sound absorption property, as compared to Examples 1 to 15. In a case of design shapes, such as vehicle floor mats, a chip mold molding in which pulverized fragments are chopped is excellent in shape imparting ability. Therefore, the melamine resin foam sheet of Example 6 is inferior in moldability, as compared to Examples 1 to 15.

When comparing Example 8 to Example 16 in terms of an addition amount of the moisture curable isocyanate compound, if an amount of the TDI-based moisture curable isocyanate compound is 40 parts by weight with respect to 100 parts by weight of the resin foam as in Example 16, a density of the mat becomes higher than a set target density, thereby increasing the weight thereof. Also, the mat becomes too hard, thereby impairing rebound resilience thereof. In addition, the sound absorption property is decreased. On the other hand, when comparing Example 11 to Example 17, even if an amount of the MDI-based moisture curable isocyanate compound is 40 parts by weight with respect to 100 parts by weight of the resin foam, this is undesirable as described above. Thus, an amount of the moisture curable isocyanate compound is preferably in a range of 10 parts by weight or more and 20 parts by weight or less with respect to 100 parts by weight of the resin foam.

Also, although examples, in which one type for each of melamine resin foam and polyurethane resin foam has been used, have been described in Examples as described above, a plurality of resin foams having different densities may be mixed and used to form a mat.

In this way, the mats according to Examples are lightweight, have a suitable hardness, and are good in sound absorption property and flame retardancy. Thus, they are suitable to be used as a building material, such as a carpet underlay, or as a vehicle interior material, such as a parcel shelf, a trunk mat, a floor mat, a floor bulk-up material, a spacer, and the like. Also, upon manufacturing, as the melamine resin foam and other resin foams, the wastes thereof can be used, thereby providing a good recycle ability. In addition, because powders thereof are not needed to be used, there is no possibility of deteriorating the working environment.

Also, to produce a mat having a desired density at a high process capability, a charging density calculated from a pre-pulverized density of each of the melamine resin foam and the polyurethane resin foam was used in mixing the pulverized fragments thereof, and then a material compression rate was obtained by dividing a set target density by the charging density. In addition, a charging weight was obtained by multiplying the set target density by a volume within the mold. By molding the charging weight at the material compression rate, a mat having a desired density, which is less in variation of density, can be achieved. As in the foregoing, the melamine resin foam and other resin foams are present in a mixed state, so that a mat excellent in sound absorption property, flame retardancy and thermal conductivity as compared to a molded body made of a polyurethane resin foam is achieved.

While the present invention has been described in detail with reference to certain embodiments thereof, it is apparent to those skilled in the art that various changes and modifications can be made therein without departing from the scope of the present invention as defined by the claims.

### Industrial Applicability

According to the present invention, it is possible to prevent a situation in which the resin foam pulverized fragments are too small such that adhesion of the moisture curable isocyanate compound is difficult, or become a powder form so that a working environment is deteriorated. In addition, it is possible to prevent a situation in which the resin foam pulverized fragments are too large such that the resin foam pulverized fragments cannot withstand a stress concentration during use of the mat, and as a result, the mat is partially dented or damaged.

### Explanation of Reference Signs

10   Mat
11   Resin Foam Pulverized Fragments
13   Moisture Curable Isocyanate Compound
15   Resin Foam Pulverized Fragments with Moisture Curable Isocyanate Compound adhered thereto
70   Mold
71   Bottom plate
75   Press Die

### Claims

1. A mat comprising resin foam pulverized fragments including pulverized fragments of a melamine resin foam, and a moisture curable isocyanate compound bonding the resin foam pulverized fragments to each other, wherein the resin foam pulverized fragments further include pulverized fragments of a polyurethane resin foam.

2. The mat according to claim 1, wherein a proportion of the pulverized fragments of the melamine resin foam with respect to the resin foam pulverized fragments is 10 wt% or more.

3. The mat according to claim 1 or 2,

wherein a density of the melamine resin foam is in a range of 5 kg/m$^3$ to 18 kg/m$^3$, a density of the polyurethane resin foam is in a range of 13 kg/m$^3$ to 40 kg/m$^3$, and a density of the mat is in a range of 23 kg/m$^3$ to 110 kg/m$^3$.

4. The mat according to any one of claims 1 to 3, wherein the largest particle diameter of the resin foam pulverized fragments is in a range of 3 mm to 30 mm,
   wherein the largest particle diameter is the dimension of the largest portion of each of the resin foam pulverized fragments.

5. A method for manufacturing a mat, comprising:

   adhering a moisture curable isocyanate compound to resin foam pulverized fragments including pulverized fragments of a melamine resin foam; and
   curing the moisture curable isocyanate compound to bond the resin foam pulverized fragments to each other, thereby providing the mat,
   wherein the resin foam pulverized fragments further include pulverized fragments of a polyurethane resin foam.

6. The method according to claim 5, wherein the moisture curable isocyanate compound is cured in a state in which the resin foam pulverized fragments with the moisture curable isocyanate compound adhered thereto are compressed.

7. The method according to claim 5 or 6, wherein a proportion of the pulverized fragments of the melamine resin foam with respect to the resin foam pulverized fragments is 10 wt% or more.

8. The method according to any one of claims 5 to 7, wherein a density of the melamine resin foam is in a range of 5 kg/m$^3$ to 18 kg/m$^3$, a density of the polyurethane resin foam is in a range of 13 kg/m$^3$ to 40 kg/m$^3$, and a density of the mat is in a range of 23 kg/m$^3$ to 110 kg/m$^3$.

9. The method according any one of claims 5 to 8, wherein the largest particle diameter of the resin foam pulverized fragments is in a range of 3 mm to 30 mm,
   wherein the largest particle diameter is the dimension of the largest portion of each of the resin foam pulverized fragments.

**Patentansprüche**

1. Matte, die pulverisierte Bruchstücke aus Harzschaumstoff, die pulverisierte Bruchstücke aus einem Melaminharzschaumstoff einschließen, und eine feuchtigkeitshärtbare Isocyanatverbindung, die die pulverisierten Bruchstücke aus Harzschaumstoff aneinander bindet, umfasst,
   worin die pulverisierten Bruchstücke aus Harzschaumstoff ferner pulverisierte Fragmente aus einem Polyurethanharzschaumstoff einschließen.

2. Matte gemäß Anspruch 1, worin der Anteil der pulverisierten Bruchstücke aus dem Melaminharzschaumstoff in Bezug auf die pulverisierten Bruchstücke aus Harzschaumstoff 10 Gew.% oder mehr beträgt.

3. Matte gemäß Anspruch 1 oder 2, worin die Dichte des Melaminharzschaumstoffs im Bereich von 5 kg/m$^3$ bis 18 kg/m$^3$ liegt, die Dichte des Polyurethanharzschaumstoffs im Bereich von 13 kg/m$^3$ bis 40 kg/m$^3$ liegt und die Dichte der Matte im Bereich von 23 kg/m$^3$ bis 110 kg/m$^3$ liegt.

4. Matte gemäß einem beliebigen der Ansprüche 1 bis 3, worin der größte Teilchendurchmesser der pulverisierten Bruchstücke aus Harzschaumstoff im Bereich von 3 mm bis 30 mm liegt,
   worin der größte Teilchendurchmesser die Größe des größten Bereichs von jedem der pulverisierten Bruchstücke aus Harzschaumstoff ist.

5. Verfahren zur Herstellung einer Matte, umfassend:

   Anbringen einer feuchtigkeitshärtbaren Isocyanatverbindung an pulverisierte Bruchstücke aus Harzschaumstoff, die pulverisierte Bruchstücke aus einem Melaminharzschaumstoff einschließen; und
   Härten der feuchtigkeitshärtbaren Isocyanatverbindung, um die pulverisierten Bruchstücke aus Harzschaumstoff aneinander zu binden, wobei dabei die Matte bereitgestellt wird,
worin die pulverisierten Bruchstücke aus Harzschaumstoff ferner pulverisierte Bruchstücke aus einem Polyurethanharzschaumstoff einschließen.

**6.** Verfahren gemäß Anspruch 5, worin die feuchtigkeitshärtbare Isocyanatverbindung in einem Zustand gehärtet wird, in dem die pulverisierten Bruchstücke aus Harzschaumstoff mit der daran angebrachten feuchtigkeitshärtbaren Isocyanatverbindung zusammengedrückt werden.

**7.** Verfahren gemäß Anspruch 5 oder 6, worin der Anteil der pulverisierten Bruchstücke aus dem Melaminharzschaumstoff in Bezug auf die pulverisierten Bruchstücke aus Harzschaumstoff 10 Gew.% oder mehr beträgt.

**8.** Verfahren gemäß einem beliebigen der Ansprüche 5 bis 7, worin die Dichte des Melaminharzschaumstoffs im Bereich von 5 kg/m$^3$ bis 18 kg/m$^3$ liegt, die Dichte des Polyurethanharzschaumstoffs im Bereich von 13 kg/m$^3$ bis 40 kg/m$^3$ liegt und die Dichte der Matte im Bereich von 23 kg/m$^3$ bis 110 kg/m$^3$ liegt.

**9.** Verfahren gemäß einem beliebigen der Ansprüche 5 bis 8, worin der größte Teilchendurchmesser der pulverisierten Bruchstücke aus Harzschaumstoff im Bereich von 3 mm bis 30 mm liegt, worin der größte Teilchendurchmesser die Größe des größten Bereichs von jedem der pulverisierten Bruchstücke aus Harzschaumstoff ist.

**Revendications**

**1.** Tapis comprenant des fragments pulvérisés de mousse de résine comportant des fragments pulvérisés de mousse de résine mélamine, et un composé isocyanate durcissable à l'humidité liant les fragments pulvérisés de mousse de résine entre eux,
dans lequel les fragments pulvérisés de mousse de résine comportent en outre des fragments pulvérisés d'une mousse de résine polyuréthane.

**2.** Le tapis selon la revendication 1, dans lequel une proportion des fragments pulvérisés de la mousse de résine mélamine par rapport aux fragments pulvérisés de mousse de résine est 10 % en poids ou plus.

**3.** Le tapis selon la revendication 1 ou 2, dans lequel une densité de la mousse de résine mélamine est dans une plage de 5 kg/m$^3$ à 18 kg/m$^3$, une densité de la mousse de résine polyuréthane est dans une plage de 13 kg/m$^3$ à 40 kg/m$^3$, et une densité du tapis est dans une plage de 23 kg/m$^3$ à 110 kg/m$^3$.

**4.** Le tapis selon l'une quelconque des revendications 1 à 3, dans lequel le plus grand diamètre de particule des fragments pulvérisés de mousse de résine est dans une plage de 3 mm à 30 mm,
dans lequel le plus grand diamètre de particule est la dimension de la plus grande portion de chacun des fragments pulvérisés de mousse de résine.

**5.** Procédé de fabrication d'un tapis, comprenant:

l'adhésion d'un composé isocyanate durcissable à l'humidité à des fragments pulvérisés de mousse de résine comportant des fragments pulvérisés d'une mousse de résine mélamine; et
le durcissement du composé isocyanate durcissable à l'humidité pour lier les fragments pulvérisés de mousse de résine les uns aux autres, fournissant ainsi le tapis,
dans laquelle les fragments pulvérisés de mousse de résine comportent en outre des fragments pulvérisés d'une mousse de résine polyuréthane.

**6.** Le procédé selon la revendication 5, dans lequel le composé isocyanate durcissable à l'humidité est durci dans un état dans lequel les fragments pulvérisés de mousse de résine avec le composé isocyanate durcissable à l'humidité adhéré dessus sont compressés.

**7.** Le procédé selon la revendication 5 ou 6, dans lequel une proportion des fragments pulvérisés de la mousse de résine mélamine par rapport aux fragments pulvérisés de mousse de résine est 10 % en poids ou plus.

**8.** Le procédé selon l'une quelconque des revendications 5 à 7, dans lequel une densité de la mousse de résine mélamine est dans une plage de 5 kg/m$^3$ à 18 kg/m$^3$, une densité de la mousse de résine polyuréthane est dans une plage de 13 kg/m$^3$ à 40 kg/m$^3$, et une densité du tapis est dans une plage de 23 kg/m$^3$ à 110 kg/m$^3$.

9. Le procédé selon l'une quelconque des revendications 5 à 8, dans lequel le plus grand diamètre de particule des fragments pulvérisés de mousse de résine est dans une plage de 3 mm à 30 mm,
dans lequel le plus grand diamètre de particule est la dimension de la plus grande portion de chacun des fragments pulvérisés de mousse de résine.

## FIG. 1

## FIG. 2

EP 2 702 906 B1

## FIG. 3

## FIG. 4

## FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000052836 A
- JP H9202169 A
- JP 2003063319 A
- JP 2005008714 A
- EP 2000488 A1
- JP 55142628 A
- JP 56152848 A